# EUROPEAN PATENT SPECIFICATION

(11) **EP 0 716 761 B1**
(45) Date of publication and mention of the grant of the patent: **23.04.1997**
(21) Application number: 94924953.6
(22) Date of filing: 01.09.1994
(51) Int. Cl.: G05B 19/418, B30B 15/26, G01L 5/00

(54) **METHOD AND SYSTEM FOR REAL-TIME STATISTICAL PROCESS MONITORING OF STAMPING PRESS PROCESS**
VERFAHREN UND VORRICHTUNG ZUR STATISTISCHEN ECHTZEITPROZESSÜBERWACHUNG EINES STANDPRESSVORGANGES
PROCEDE ET SYSTEME DE SURVEILLANCE STATISTIQUE EN TEMPS REEL DU PROCESSUS DE FONCTIONNEMENT D'UNE PRESSE A ESTAMPER

(30) Priority: 03.09.1993 US 116188
(43) Date of publication of application: 19.06.1996
(73) Proprietor: FORD MOTOR COMPANY LIMITED, Brentwood, Essex CM13 3BW (GB); FORD-WERKE AKTIENGESELLSCHAFT, 50735 Köln (DE); Ford Motor Company, Dearborn, MI 48121 (US)
(72) Inventor: MANGRULKAR, Suresh, Mareshwar, Farmington Hills, MI 48336 (US)
(74) Representative: Messulam, Alec Moses
(86) International application number: PCT/GB94/01890
(87) International publication number: WO 95/06903

(56) References cited:
- EP-A- 0 084 284
- EP-A- 0 460 294
- EP-A- 0 522 684
- WO-A-93/13935
- US-A- 4 121 289
- US-A- 4 633 720
- US-A- 4 817 006

## Description

The present invention relates to process monitoring and, more particularly, to real-time statistical process monitoring for a draw press.

Sheet metal remains the primary material utilized in the making of an automobile body, despite the advent of plastics technology. Sheet metal body parts, such as fenders and quarter panels, are formed utilizing conventional stamping presses. In an effort to minimize operating cost and maximize part quality, it is desirable to monitor operation of these presses, so as to ensure the process remains within statistical control.

For example, United States patent number 4,750,131, issued to Martinez, discloses a method of detecting faulty parts in a progressive die press having a plurality of forming stations, each of which includes a forming tool and a force transducer. The method includes the steps of producing a preselected number of sample parts while collecting reference force data from the force transducers for a plurality of displacements. The reference force data and the displacement data are applied to a processor which produces a reference curve for each of the forming stations. Production force data are provided to the processor and compared to the curve for each of the displacements and for each of the forming stations. A faulty part is indicated when the production force data for at least one of the displacements is different from the reference force data of the reference curve by a preselected difference.

United States patent number 4,987,528, issued to O'Brien, discloses a signature analysis control system for a stamping press. A reference signature corresponding to desired force values at particular sampling points during the RAM cycle is developed. The force signature for successive cycles of the press is then compared to the reference signature, and the press inhibited in the event that any sampling point deviates from the corresponding point in the reference signature by more than predetermined limits.

However, these existing systems and methods for monitoring manufacturing processes are rigid and inflexible in that they rely on one aspect, i.e. force amplitude, to detect problems. For example, the '131 patent teaches collecting reference and production force data to obtain reference and production force curves. The production force curve is then compared to the reference force curve, and difference beyond acceptable limits indicate flaws. Similarly, the '528 patent discloses controlling press operation based on comparisons between desired force amplitude values and actual force amplitude values. Reference and operational force signatures are generated from force signals and compared to each other to detect out-of-tolerance conditions. By limiting analysis to force amplitude, however, many aspects of the process can not be properly monitored. As a result, the process can go out of statistical control. The problem goes undetected until the unacceptable parts that have been formed roll off of the line.

Mickowski, in US patent 4 734 869, teaches a diagnostic method for monitoring and recording objective measurements of machine performance. Mickowski makes direct measurements of position, temperature, and pressure as a function of stroke position during a production cycle. Position, temperature and pressure are each measured by a single sensor, or transducer. Based on these direct measurements, velocity, temperature and pressure profiles are generated as a function of stroke position during a production cycle. A "current" profile can then be superimposed visually on to a "master" profile. Thus, Mickowski compares current direct measurements with previously made direct measurements. In contrast to Mickowski, the present invention makes use of real-time statistical process monitoring utilizing feature extraction wherein each feature represents a parameter that is incapable of being directly measured by a single sensor.

In Patent specification WO-A-93/13935 there is described a process controller for controlling And monitoring a press. The controller samples the force produced on a workpiece and compares this force to historical force data associated with the position at which the force is sampled. The historical data is stored in the form of control arrays based on one or more signature arrays stored during satisfactory operation of the press. The force samples are compared to the control arrays to detect deviations in the operation of the press and to control the functioning of the press in the event of an unacceptable sample.

In US-A-4 633 720 there is described a press control system providing a display of press load as a function of time scaled by the speed of the press. The press load as a function of time is automatically analysed to determine and display the number of die stations in a progressive die and the peak loads associated with each die station. The peak loads are compared to limit values that depend in part on the past history of the press in order to monitor the condition of the progressive die and if necessary to shut down the press.

Because there are many factors which affect process control and part quality, it is most desirable to monitor press operation utilizing a plurality of parameters which can be extracted from the press signature in real-time.

In any metal stamping process, the thickness of the blank and the work hardening coefficient of the material are two important characteristics that determine stamping quality. The blank thickness is also important for compliance with motor vehicle safety standards which specify a certain thickness for automobile bodies. Thus, if the blank thickness falls below a certain level, any parts produced therefrom are unacceptable and become scrap.

Work hardening coefficient is important from the point of view of drawability. Work hardening coefficient can be measured in different ways, such as the limited dome height (LDH) test, which is performed on the incoming material. In spite of all the quality assurances provided by suppliers, the incoming material still needs to be monitored. This usually happens in the form of a spot check at the stamping plant. Even with the spot checks, splits in the stamped metal body panels can occasionally occur, due to improper work hardening coefficient.

These splits and cracks not only produce a lot of scrap, but also result in production delay. Previously, monitoring the thickness of steel stock required manual measurement of the thickness using a tool, such as a micrometer, and measurement of the work hardening coefficient required laboratory instrumentation.

Accordingly, there is a need to be able to measure the blank thickness and the work hardening coefficient of the material in an on-line fashion, while the parts are being produced, so that appropriate action can be taken to prevent the formation of any defective parts or production delays.

It is the object of the present invention as defined in independent claims 1 and 5 to provide an improved method and system for process monitoring of a press operation.

According to the invention,there is provided a method of monitoring the operation of a stamping press including a punch and die for forming parts from a blank, the method including measuring a production variable at at least two preselected locations in the press stroke, and determining the deviation of the variable from a reference value at each of the locations to detect when deviations exceed control limits;
characterised in that the production variable measured at the preselected locations in the press stroke is the punch tonnage and the method includes the further steps of
calculating deviations in the thickness of the blank by calculating changes in the average punch tonnage measured at the preselected locations and,
calculating deviations in the work hardening coefficient of the material of the blank by calculating changes in the slope of the punch tonnage at the preselected locations.

A deviation (dTh) in the blank thickness may be estimated, based on the production press operating variables for the locations, according to the relationship:${\text{dTh = ((ΔLf}}_{\text{2}} {\text{+ ΔLf}}_{\text{1}} {\text{)/2) * (B}}_{\text{t}} \text{)}$ wherein ΔLf₂ and ΔLf₁ are deviations, expressed as fractions, in the production operating variable from the associated baseline mean press variable, and Bt is the thickness of the blank used to form the baseline parts. Again, a parameter (dN) proportional to a deviation in the work hardening coefficient may estimated according to the relationship:${\text{dN = (ΔLf}}_{\text{2}} {\text{- ΔLf}}_{\text{1}} \text{)}$ wherein ΔLf₂ and ΔLf₁ are deviations, expressed as fractions, in the production operating variable from the associated baseline mean press variable.

The invention also includes a system for carrying out the method comprising means for measuring a baseline mean press operating variable at at least two preselected punch travel locations while a predetermined number of baseline parts are being produced; means for measuring a production press operating variable at said locations while production parts are being made; means for establishing operating limits for production operating parameters based on the baseline mean press operating variables, the operating limits representing limits within which the stamping process is in control or producing acceptable parts; processing means for processing the production press operating variables to obtain in real-time production operating parameters; and means for comparing the production operating parameters with the operating limits for the purposes of process control.

The advantages accruing to the present invention are numerous. For example, the method of the invention permits the detection of unacceptable blank thickness and work hardening coefficient in an on-line manner while parts are being produced. As a result, a press operator can identify when corrective action needs to be taken and take the action prior to the production of defective parts and prior to the unnecessary production delays. Additionally, consistency of stampings is improved, thereby improving the overall fit and finish of the automobile body parts. This also results in tangible cost savings derived from reduced scrap and rework. Still further, process drifts are identified quickly, reducing press down-time. Process monitoring according to the present invention also improves the confidence of first-run capabilities and provides manufacturing flexibility.

Embodiments of the invention will now be described in more detail, by way of example, with reference to the accompanying drawings, in which:
Figure 1 is a perspective view of a typical press line including a process monitoring system for monitoring press operation according to the present invention;
Figure 2 is a perspective view of a press, such as a double-action draw press shown in Figure 1:
Figure 3 is a block diagram of the major modules of the strategy of the present invention:
Figures 4a-4b are an illustration of screen displays for use with the present invention, illustrating a plurality of features extracted from a press signature and the associated diagnostic statistical process control charts;
Figures 5a-5b is a flow chart detailing a process monitoring strategy of the present invention;
Figure 6 is a graph illustrating diagnosis and detection of unacceptable parts based on process monitoring as used in the present invention but with the outer tonnage as the extracted feature;
Figure 7 is a flowchart detailing the steps for monitoring blank thickness and work hardening coefficient from punch tonnage measurements according to the present invention;
Figures 8a-8b are an illustration of screen displays for use with the present invention, illustrating a plurality of features, including deviations in blank thickness and work hardening coefficient, extracted from a press signature and the associated diagnostic statistical process control charts; and
Figure 9 is a graphical plot of punch tonnage versus punch position for a baseline sheet metal stock and a new batch of sheet metal stock, illustrating a drift in punch tonnage.

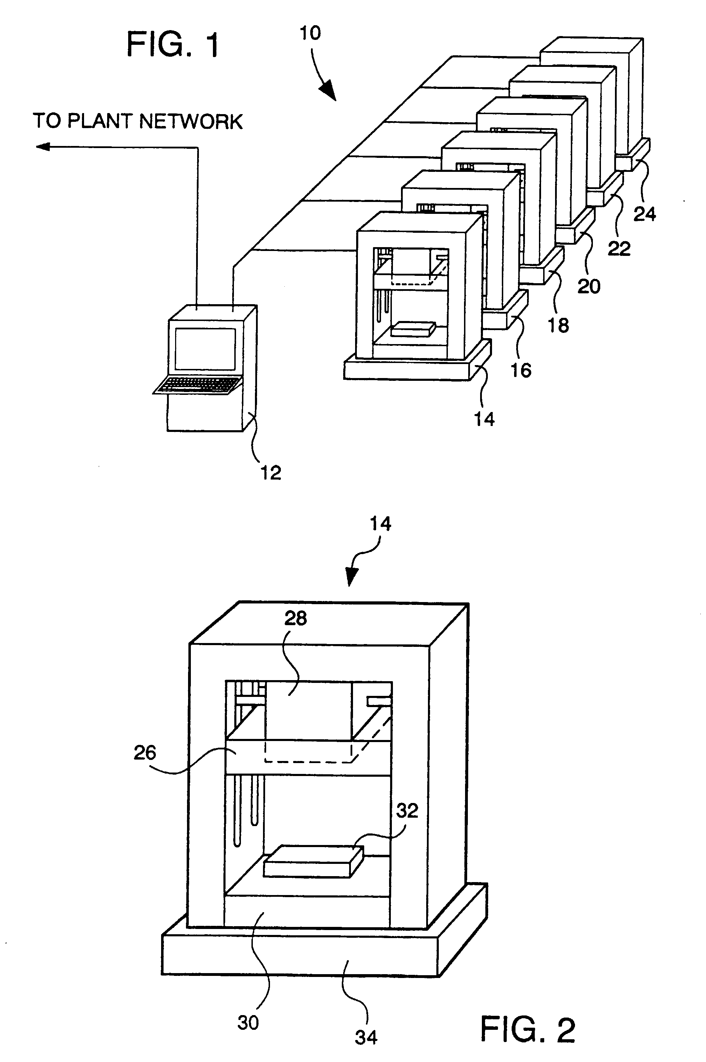

Referring now to Figure 1, there is shown a perspective view of a typical press line shown generally by reference numeral 10. As shown, the press line includes a plurality of presses 14-24, each for performing a certain metal forming operation on a blank of material during a production cycle. For example, the presses might sequentially perform the following metal forming operations: double-action draw, trim and pierce, cam flange/form/trim, cam flange/pierce, cam flange/ pierce/restrike, and cam curl/pierce/form.

As shown in Figure 2, a double-action draw press 14 includes an upper binder 26, an upper punch 28, a lower binder 30 and a lower punch 32. Since the press 14 is typically an underdrive press, a motor (not specifically illustrated) is located under the press base 34. As is known, a plurality of pull rods are located in the press 14, extending upward from the motor to a crankshaft for moving the upper binder and upper punch in a downward direction. Strain gauges collect data during press operation and can be mounted at a number of locations on the press, such as the pull rods, the press columns or the pitman arms. Preferably, the strain gauges are mounted as close as possible to the stamping die. The press also includes an encoder not specifically illustrated for measuring the stroke positions of the two rams of the press. When a blank of material, such as sheet metal, is placed in the press 14, the upper binder is moved down and clamps the blank. The upper punch continues to move downward and, in cooperation with the lower punch, forms the part.

Referring again to Figure 1, the press line also includes a process monitoring system 12.
Although only one process monitoring system is shown, a plurality of process monitoring systems could be utilized. The process monitoring system 12 executes a monitoring program for monitoring operation of the individual presses 14-24 based on data received from the presses, such as from the strain gauges. The system also generates process control information, as described in greater detail herein below. In the preferred embodiment, the monitoring program is designed to allow a user to easily acquire data from a press or similar machine while monitoring the quality of the parts being produced. The monitoring program also enables the user to review the data in various formats, to create different experiments by varying acquisition parameters, and to store data efficiently. The user interface of the monitoring program makes use of screen windowing and manipulation routines. User selectable commands are organized into menus and sub-menus which are traversed with the aid of the cursor keys on a keyboard (not specifically shown), or other input device. The monitoring program, preferably written in the C computer language, makes use of a variety of libraries for general purpose functions, data analysis and graphic presentations, and the like. The monitoring program operates on any standard computer, such as an IBM or IBM compatible machine, equipped with an analog-to-digital (A/D) card for data acquisition, such as part number DAS16F, commercially available from Metrabyte. The computer also preferably has at least 640K of random access memory (RAM) and an EGA compatible color graphics card and monitor. A hard disk is preferred as the main storage media, as is a floating point coprocessor, since much of the monitoring program is very computation oriented.

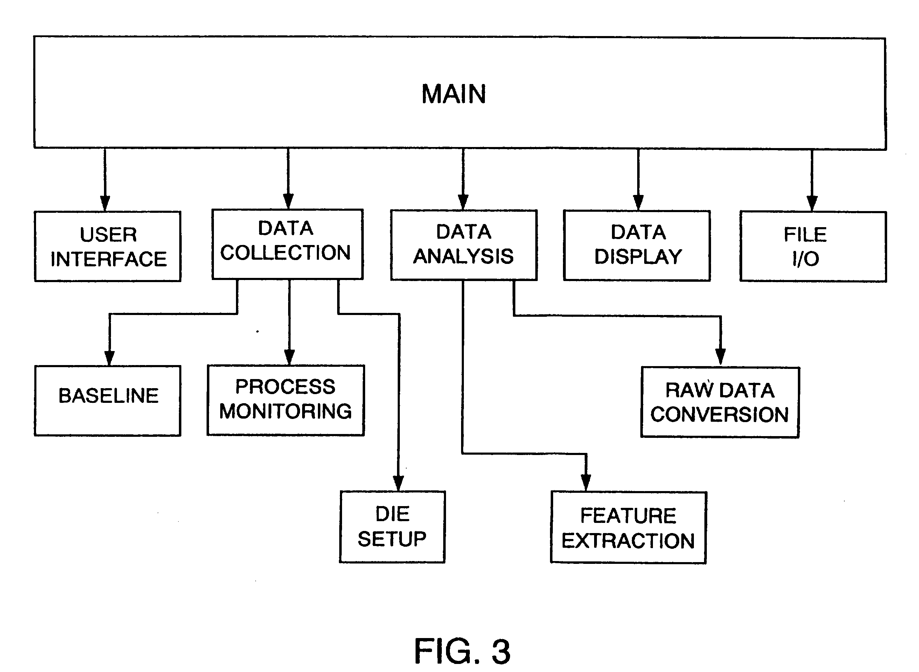

Referring now to Figure 3, the monitoring program can be divided up into a plurality of major conceptual modules according to their function and association with a library of tools. These modules include the User Interface, Data Collection, Data Analysis, Data Display and File I/O. The User Interface module utilizes windowing and data entry displays and consists of a main menu with several sub-menu choices covering the range of functions available for manufacturing process monitoring according to the present invention. The sub-menu choices include Setup, System, File, Run, Signature and Review.

The Setup menu choice allows the user to modify and display any parameters or user-provided information necessary for data collection. Under Setup, the user can define the information which governs the statistical process monitoring. For example, the user can specify the sizes of baseline and subgroup samples, the reference part number, and the sigma ratios for-control and quality limits. The user can also perform calibration operations under Setup, correcting raw voltage signals from sensors prior to conversion into engineering units. This allows the user to correct for possible drift in the voltages generated by the sensors or, to compensate for different types of sensor that provide a different output voltage. Preferably, the user is presented a menu displaying the analog reading, raw voltage, gain, offset, corrected voltage, and calculated reading in engineering units for each channel. Each channel represents a single input source to the system from a sensor on a press. The data from the channel is first converted by the A/D translation card to an associated analog data value (ADV), an unsigned 2-byte integer representation of the analog voltage signal from the sensor. Since the translation card has a 10 volt range with 12 bit resolution, the analog data value has a range of 0 to 4096, wherein 1 ADV represents 10/4096 volts.

Still further, the Setup routine allows the user to view and change the characteristics of each channel, by modifying the names, units and conversion equations. The user can also view and change the characteristic of the specified features by defining the desired features that will be extracted from the process signature. A feature, for purposes of this discussion, is a value extracted through direct measurement, or extracted through some form of computation from the data collected on one or more channels. Preferably, the features that are defined are those that directly affect the quality parameters of the part. For example, the maximum punch tonnage could be classified as a feature, since it might directly affect the quality of a character line on a fender. A feature should also have a physical significance relative to the process and/or be adjustable on the press. This facilitates press diagnostic and corrective action during an out-of-control (i.e. outside the quality limits) condition. For example, the maximum punch tonnage setting is also a setup parameter that is adjustable on the press if it is drifting out-of-control. Binder (i.e. outer) tonnage, punch (i.e. inner) tonnage, tonnage distribution around the press corners and nitropressure tonnage are typical examples of features that represent direct sensor measurements, whereas a parameter representing a variation in blank thickness, which may be computed from punch tonnage at various locations, is an example of a computed feature.

It should be appreciated by one of ordinary skill in the art that the ability to monitor process operation utilizing a plurality of features defined and specified by the user, instead of being restricted to the use of a single aspect (i.e. force amplitude) to detect problems as in the prior art, provides many advantages. For example, because a plurality of user-specified features are monitored, many different problems can be diagnosed and/or detected earlier than with existing systems. Additionally, consistency of stampings is improved, thereby improving the overall fit and finish of the automobile body parts. This also results in tangible cost savings derived from reduced scrap and rework. Analysis of the process signatures according to the present invention flags impending maintenance requirements, thus proactive maintenance of equipment is facilitated. Still further, process drifts are identified quickly, reducing press down-time. Process monitoring according to the present invention also improves the confidence of first-run capabilities and provides manufacturing flexibility.

Different features can be utilized to diagnose and detect different problems. For example, monitoring peak tonnage between punch strokes can be utilized to detect functionality of the nitrogen cylinders of the press, whereas monitoring the work done by the die can be utilized to detect sheet blank material properties. As a result, the present invention provides the ability to diagnose and detect problems earlier than with existing systems.
Additionally, for features, the user can modify names, units, baseline means and standard deviations, and can define upper and lower quality limits.

The Setup routine also allows the user to modify data acquisition parameters, such as the sampling rate and number of samples in each "hit" acquisition, and the pre- and post-triggers and their values for data acquisition as well as the trigger value for the offset. A "hit" represents the complete down and up movement of the inner and outer ram on the press. Still further, the Setup routine allows the user to activate/ deactivate autosaving, to modify the number of hits per data file and to modify the number of files to save during process monitoring. The System menu selection encompasses commands available to perform DOS level functions by exiting the MPM monitoring program or creating a DOS shell.

Under the File menu selection, the user has access to all the available file manipulations in the MPM system. Various types of files exist, each containing different types of information, and are differentiated by the name of their extension.

Data File I/O handles both reading and writing of data files, which are preferably created automatically after a given number of hits, allowing the data acquisition to run for a long period of time unattended. Preferably, the data file stores not only the data itself, but also the settings that were current at the time of the file creation and the baseline that was used during process monitoring. After a data file has been read in successfully, other menu choices available, e.g. sub-menu Review, are enabled. In addition to reading and writing complete data files, the MPM system allows for both the reading and writing of single hit files.

Baseline File I/O handles both the reading and writing of baseline files, which are read in to serve as the basis for process monitoring, providing a reference point to judge whether features are above or below calculated limits. After the baseline data has been acquired, the system calculates averages, standard deviations, and the like for the features, and writes the same to an appropriate file.
Preferably, the baseline file also stores the settings that were current at the time of writing the baseline file. Once the baseline file has been successfully read, Process Monitoring can begin, described in greater detail below.

Settings File I/O handles both the reading and writing of settings files. Preferably, the settings files contain the user-specified header information, the SPC parameters, acquisition parameters, autosave parameters, signal and feature names, gains and conversion data.

The Run menu choice of the User Interface is associated with the Data Collection module, which includes the Baseline and Process Monitoring sub-modules, as shown in Figure 3. In the preferred embodiment, the Run menu choice includes five sub-menu choices: Baseline Data Acquisition; Process
Monitoring; Manual Data Acquisition; Die Setup and Event Logging. Each becomes necessary during different situations which arise during data acquisition.

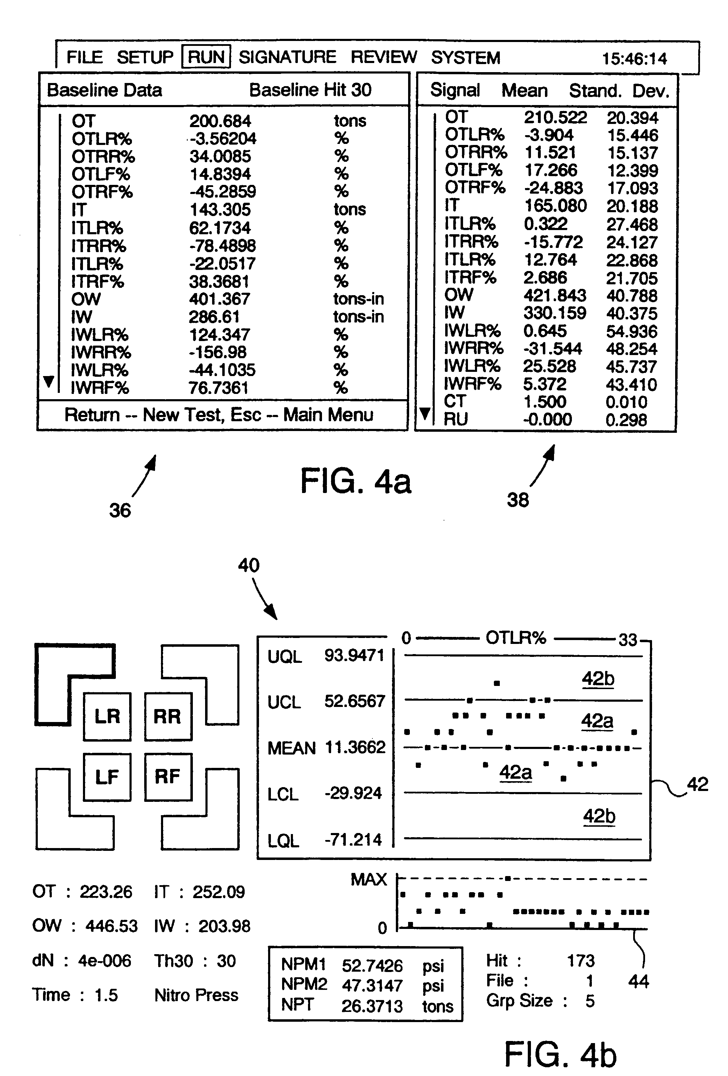

Baseline data acquisition reads the number of hits specified as the baseline sample size (e.g. 50), calculates related statistical information, such as mean and standard deviation, and also generates a single hit file for each hit. Since acquisition of baseline data is a prerequisite for selecting the Process Monitoring sub-menu choice, baseline data acquisition is normally run (or read from a file) at the beginning of a process monitoring session.
Baseline generates a split screen: on the left, a feature screen, shown generally by reference numeral 36, is displayed containing the features of each hit; on the right, a means and standard deviations screen, shown generally by reference numeral 38, is displayed for each feature, as shown in Figure 4a.

Prior to the start of actual production and process monitoring, the dies should be set-up and properly aligned. During die set-up, an appropriate setup file and a baseline file is read. Once the new die set is installed in the press and a part is made, the process monitoring system compares the single hit information to a reference baseline. If there is an out-of-limit condition, this will be visually highlighted and the operator should take corrective action. The above cycle is continued until the die is correctly configured. Typically, the limits for die set-up are tighter than actual production control limits.

Process Monitoring, the most complex of the data acquisition routines, preferably generates a custom screen, shown generally by reference numeral 40, containing a block diagram of the press and a display of features, such as total tonnages and cycle time, as best shown in Figure 4b. As shown, the block diagram of the press is divided into sections, each of which represent the different inner and outer corners of the press and which are normally colored white. When a monitored feature is out of the specified operational limits, the box changes color. In the preferred embodiment, the operational limits include control limits and quality limits. During process monitoring, statistical process control charts, such as an X-bar chart, shown generally by reference numeral 42 in Figure 4b, and an R-chart shown generally by reference numeral 44 in Figure 4b, are generated and updated as data is collected, for each box displayed.

With continuing reference to Figure 4b, the areas of the X-bar chart shown generally by 42a indicate a feature that is under control, and the areas of the chart shown generally by 42b indicate a feature that has exceeded the control limits, but is within quality limits (i.e. within acceptable tolerances). Exceeding the control limits signifies that the process is not in statistical control and is indicative of the presence of a special cause of excessive variation. For a process to be considered in control, all of the features should be in the control limits. Exceeding the quality limits signifies a process that will produce out-of-spec parts. The X-bar chart 42 of Figure 4b shows the tonnage data collected during process monitoring for the left rear outer corner (OTLR) of the press, in relation to the control limits and quality limits determined based on the means and standard deviation associated with the previously collected baseline data.

Manual data acquisition is used primarily in diagnosing a problem with the press. During manual data acquisition, feature data from one press hit is collected and displayed in graphical format.

Under Event Logging, the MPM system monitors the current process run for a particular event, such as a tonnage value exceeding some predetermined limit. The user can select an event from a list of default events, or the user can specify his own event. When the MPM system has detected the occurrence of the specified event, a time stamp is recorded along with a description of the event in a file.

To begin data acquisition, the user specifies a channel to be monitored for the feature values that will begin and end the data acquisition (i.e. the pre- and post-triggers, respectively). In addition to the acquisition trigger values, tonnage offsets are determined. When the binder is unloaded and stopped (i.e. at about 356° of binder position), the four outer and the four inner corner tonnages are each preferably sampled ten times. An average for each of the eight corners is then calculated and these values become the tonnage offsets, which are then subtracted from the peak corner tonnages read during a hit. In the preferred embodiment, the pre- and post-triggers are established utilizing ram position of the outer binder, measured in inches. Once a manual hit is requested or a Baseline is run, the acquisition routines will continuously sample the specified channel until the pre-trigger value is found and data acquisition commences. Once the data acquisition pre-trigger point is found, the channels are continuously sampled until one of the following conditions is satisfied: memory overflow; the desired number of samples has been collected; or the post-trigger value is found.

It should be appreciated that the degree of accuracy this trigger method provides depends on how fast the voltage on the trigger channels changes, as well as the inherent speed of the data acquisition software and the machine on which it is running. Of course, there is a lapse between the time that the value on the channel is recognized to be the trigger value, and the time that the jump to the actual data collection routine is performed. In addition, there is a delay inherent in the data collection routine itself depending on how many channels are being sampled, and how fast the software is executing.

For example, if the pre-trigger point is set to the 4" mark on the binder downstroke, the first data point will typically be collected somewhere between 3.9" and 3.75". If the acquisition is allowed to run until the sample memory area is filled up, the post-trigger point can be determined with much greater precision, since the memory area can be searched to the exact point where the sampled value matches the post-trigger value. If a memory overflow condition occurs prior to detection of the post-trigger value, the data sample will be incomplete as far as to what the user desired. Most preferably, data collection continues after detection of the post-trigger value, assuming sufficient memory exists. The data stored is then truncated to the number of samples requested by the user or at the post-trigger value. This data is considered to be "raw" data and consists of a sequence [(# of channels) x (sample size)] of integers (e.g. 2-byte values) stored successively in a memory area.

With continuing reference to Figure 3, the Data Display module utilizes the Signature and Review menu selections. The Signature menu selection allows the user to access any of the channels recorded during one hit (Baseline or manual) and display the data graphically on the screen. Display options include allowing the user to plot channel data of up to four different signals at the same time, or allowing the user to correlate channel data against each other by providing the user with the capability of plotting one channel along the X-axis of the graph and another channel along the Y-axis. The latter option is particularly useful for visualizing the work curve with stroke versus tonnage.

The Review menu selection allows the user to plot hits and subgroups, display an alarm report and display SPC charts. The Plot option allows the user to select which type of data to review (i.e. baseline or actual process monitoring) and allows the user to specify up to three channels or features to plot. The channels are plotted on one set of axes, if possible, or on multiple graphs if not possible.

The Alarm report option displays any alarms associated with the current data file in memory. An alarm exists when a monitored feature has exceeded either the quality or control limits during process monitoring. The contents of an alarm report can vary to include the monitored feature, the time of day the feature exceeded the limits, and the like.

The SPC Chart option creates an SPC chart for a selected feature extracted from subgroup data. Preferably, the charts are created using lines which are color-coded based on the limits of the data: for example, the line plot representing the actual data is white; the mean of the feature is indicated by a yellow line; the upper and lower control limits are indicated by green lines; and the upper and lower quality limits are indicated by red lines. The display is "self-scaling", such that if the data is far outside the limits, the display will adjust so that both are displayed on the screen at the same time.

In the preferred embodiment, the SPC chart includes two forms of control charts: an X-bar chart and an R-chart. These charts explain process data in terms of both location (process average) and spread (piece-to-piece variability). The X-bar chart is a measure for location and is the average of the values in a small subgroup. X-bar is the average for each subgroup and is determined by the following equation:$\overline{\text{X}} \text{=} \frac{{\text{X}}_{\text{1}} \text{+} {\text{X}}_{\text{2}} \text{+ .. +} {\text{X}}_{\text{i}} \text{+ .. +} {\text{X}}_{\text{n}}}{\text{n}}$ where n = subgroup size and Xᵢ = a data point within the subgroup. Assume that for a stable production process, Xᵢ is normally distributed with production mean and standard deviation of µ and σ, respectively. According to sampling theory, X-bar will be normally distributed with standard deviation of (σ/√n). The control limits (UCL, LCL) for the X-bar chart are, therefore, computed as follows:$\text{UCL = µ + yσ/√n}$$\text{LCL = µ - yσ/√n}$ where µ = production mean, as determined from the baseline data; σ = production standard deviation, as determined from the baseline data; and y = default value of 3, for a 99.7% confidence level.

Exceeding the control limits is indicative of the process mean drifting out of control due to an attributable cause which needs to be corrected to bring the process back in control. For example, this may be caused by steel from a different batch or supplier with a different characteristics. An out-of-control condition may not always affect the stamping quality. Therefore, in the preferred embodiment, provision has been made on the X-bar chart for the inclusion of quality limits. These limits are preferably determined experimentally to establish the effect of certain variables on stamping quality. These variables may include process parameters such as punch tonnage settings as well as steel parameters such as blank thickness and work hardening coefficient. These quality limits, when exceeded, will indicate a significant effect on stamping quality.

The R-Chart (or Range Chart), shown by reference numeral 64 of Figure 4b, is a measure of spread Generally, it is represented by the "range" of the data within a subgroup sample. Due to the real-time computer capability of the system, the range calculation is preferably replaced by calculated subgroup standard deviation as the representation of the data spread. Each subgroup data point is, therefore, determined by the following equation: 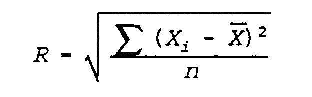 According to the sampling theory, for a given production variability and subgroup size, R² follows a χ² distribution with (n-1) degrees of freedom. The upper control limit (UCL) for the R-Chart is, therefore, determined by the following equation:$\text{UCL =} \sqrt{\frac{{\text{χ}}^{\text{2}} {}_{\text{99}} {\text{* σ}}^{\text{2}}}{\text{n}}}$ where χ²₉₉ = the χ² distribution with 99% confidence factor for n-1 degrees of freedom; σ = standard deviation derived from the baseline data; and n = subgroup size. Any out of range condition in the R-Chart will be indicative of change in process capability. This condition may not be correctable by shifting the process means by simply resetting the die, and may possibly require process or machine maintenance.

As shown in Figure 3, analysis of the data collected includes Raw Data Conversion and Feature Extraction. once the data has been sampled and stored in a memory area as the ADV value representation of the voltages seen on the channels, various features will be extracted from the raw data. As previously mentioned, in addition to features such as variation in blank thickness which are incapable of being directly measured by a single sensor, the process control system can also employ features which are direct sensor measurements including conversion of the voltage representation to engineering units based on the range of the sensor that provided the voltage. The following is a description of a number of features in addition to deviations in blank thickness and work hardening coefficient which may be extracted from the raw data collected on each of the channels.

### Total Outer Tonnage (OT)

The maximum ADV value is determined for each of the four outer corners of the die, then added together and multiplied by an appropriate conversion factor associated with the tonnage sensor

### Total Inner Tonnage (IT)

The maximum ADV value is determined for each of the four inner corners, then added together and multiplied by an appropriate conversion factor associated with the tonnage sensor.

### OT percentages (OLLR%, OLRR%. OLLF%. OLRF%)

The maximum ADV value is determined for each of the four corners, then for each corner the following calculation is performed:

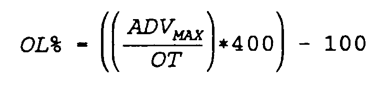

### IT Percentages (ILLR%, ILRR%, ILLF%, ILRF%)

The maximum ADV value is determined for each of the four inner corners, then for each corner the following calculation is performed:

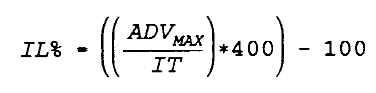

### Outer Work (OW)

For each corner, the tonnage value at each sample point is multiplied with the difference between the outer stroke at the sample point and the outer stroke at the next sample point, which is then added up. Then the work for the four corners are added together to obtain the total Outer Work.

### Inner Work (IW)

For each corner, the tonnage value at each sample point is multiplied with the difference between the inner stroke at the sample point and the inner stroke at the next sample point, which is then added up. Then the work for the four corners are added together to obtains the total Inner Work.

### Inner Work Percentages (IWLR%, IWRR%, IWLF%, IWRF%)

The work for each corner is calculated, then the percentages of total inner work is calculated as follows:

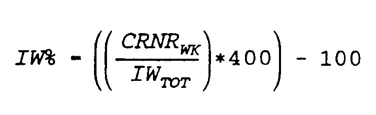

### Cycle Time (CT)

The cycle time is the time from detection of the pre-trigger (start of data acquisition) to the time the post-trigger was detected (end of data acquisition). In the preferred embodiment, cycle time is calculated as follows:$\text{CT =} \frac{{\text{T}}_{\text{S}} \text{*} \text{N}}{\text{100}}$ wherein T_{S} is the sample time and N represents the number of samples.

### Inner Theta (θ_{I})

The theta value, expressed in degrees, describes the orientation of the inner load and is calculated as follows:

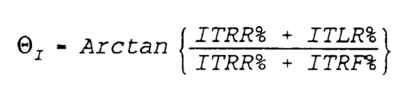

### Outer Theta (θ_{O})

The theta value, expressed in degrees, describes the orientation of the outer load and is calculated as follows:

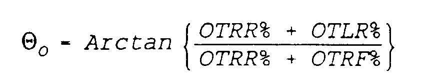

### Inner Phi (Φ_{I})

Phi, expressed in degrees, describes the gradient for inner tonnage and is calculated as follows:${\text{Φ}}_{\text{I}} {\text{= arctan {[(ILRR% + ILRF%)*cos(θ}}_{\text{I}} \text{)]/200 +} {\text{[(ILRR% + ILRF%)*sin(θ}}_{\text{I}} \text{)]/200]}}$

### Outer Phi (Φ_{O})

Phi, expressed in degrees, describes the gradient for outer tonnage and is calculated as follows:${\text{Φ}}_{\text{O}} {\text{= [(OLRR% + OLRF%)*cos(θ}}_{\text{O}} \text{)]/200 +} {\text{[(OLRR% + OLRF%)*sin(θ}}_{\text{O}} \text{)]/200}$

### Nitrogen Pressure Max @ 0" OS (NPM)

The sample point where OS (outer ram) 0" is located and the ADV values for the two nitrogen pressures at that point are added and then converted to the proper engineering unit.

Other features could include maximum nitrogen pressure tonnage, outer tonnages at particular downstrokes and maximum inner and outer tonnages.

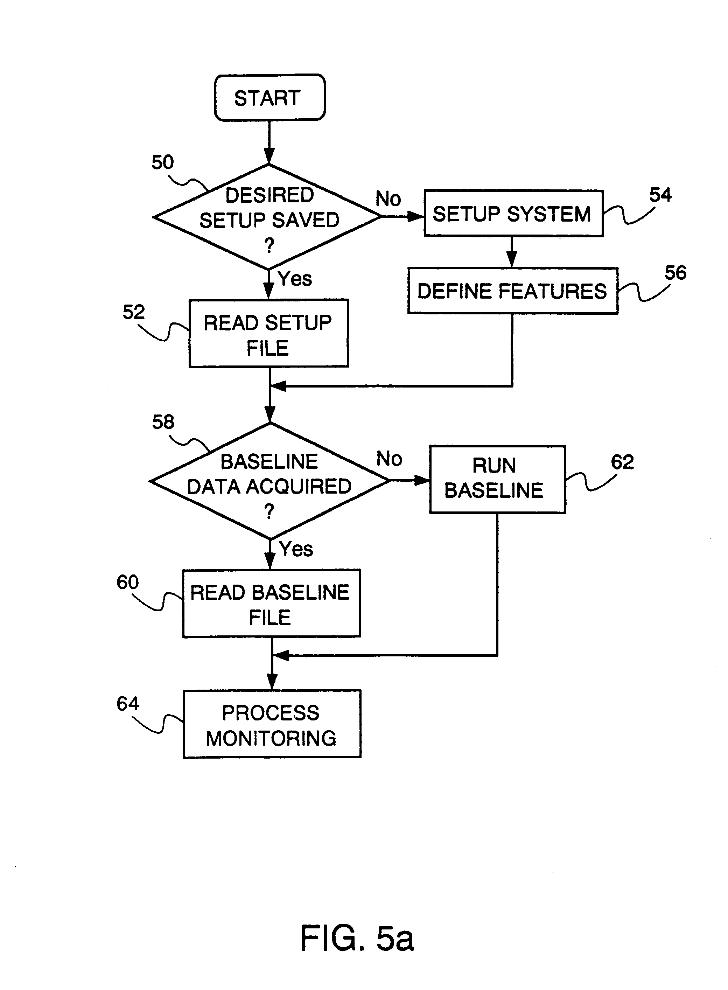

Referring now to Figures 5a-5b, there is shown a flowchart detailing the process monitoring strategy of the present invention, as executed by the process monitoring system 14 shown in Figure 1. As shown, at step 50, the process monitoring system determines whether there is setup information saved. Prior to running process monitoring, features are defined and default settings of statistical process control parameters, acquisition parameters including test header information and the like are preferably set-up and confirmed utilizing the Setup routine discussed above. If the desired setup information has been saved, at step 52 the appropriate setup file is accessed and read. If setup information has not been saved, at step 54 the user manually sets up the system by performing signal calibration procedures, specifying test header information and printer information, and inputting SPC, acquisition and autosave parameters, according to the Setup routine. During this setup, the user also defines the desired features at step 56 that will be extracted from the process signature during the baseline and process monitoring operations and saves them. The features preferably available, as discussed above, can include total tonnages, work and tonnage gradients.

As best shown in Figure 5a, at step 58 the system determines whether baseline reference data has already been established. If it has, the appropriate baseline file is accessed and read at step 60. If baseline information does not already exist, at step 62 a baseline data acquisition procedure is executed. In the preferred embodiment, baseline execution includes acquiring a predetermined number of stamping hits and calculating process means and standard deviation for each specified feature. After the baseline has been saved, control limits and quality limits are calculated for each of the desired features of the selected subgroup sample size. In the preferred embodiment, the baseline is run when the the process is stable, making good quality stampings using blanks that are near the specification means and the press is running at the specified cycle time. The baseline data acquired is used as a reference for process monitoring during production, as described in greater detail below.

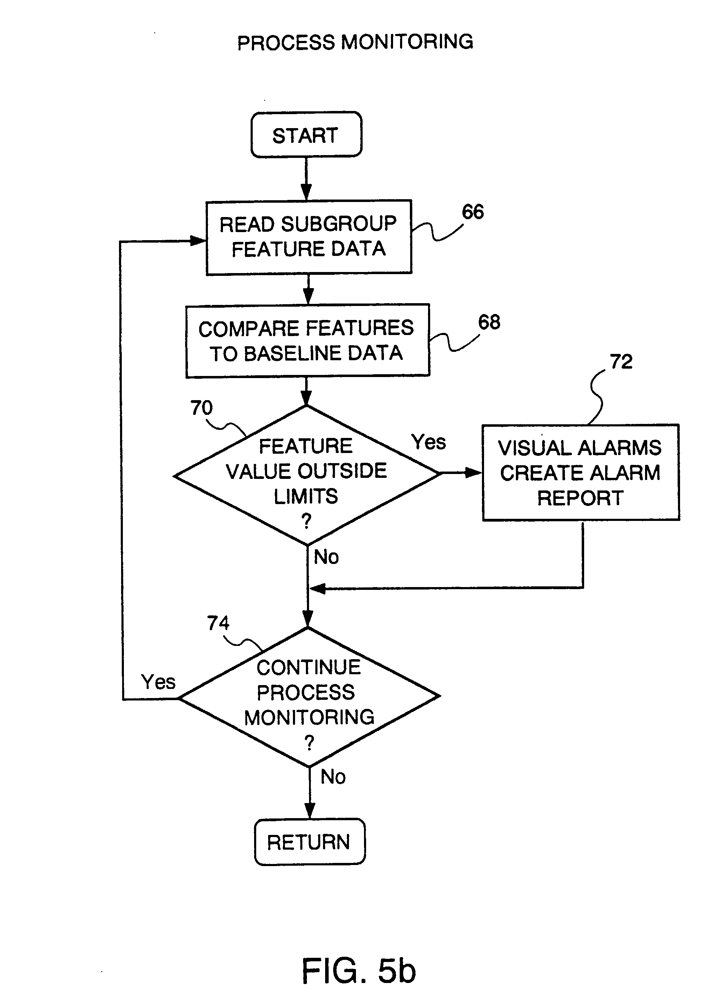

With combined reference to Figures 5a-5b, once the baseline data has been acquired, process monitoring is initiated at step 64. As best shown in Figure 5b, at step 66 the press is operating and the process monitoring system acquires the subgroup feature data from a specified number of stamping hits (e.g. five). The subgroup feature data is then averaged and an associated SPC data point is plotted on an SPC chart (such as that shown in Figure 4). At step 68, the features are compared to the baseline data, i.e. compared to the quality limits and the control limits determined from the baseline data. If the data point exceeds a quality limit or a control limit at step 70, the appropriate visual arm is-initiated at step 72. As discussed above, this includes, where appropriate, modifying the color of the affected section of the press.
Additionally, an appropriate alarm report is created and stored. If the user desires to continue process monitoring at step 72, steps 66-72 are repeated as described above and data will continually be acquired and selective process feature information will continue to be plotted on the X-bar and R-charts. Once the defined number of process monitoring data points are accumulated, the data will be automatically written to an appropriate data file so long as the autosave parameter has been activated.

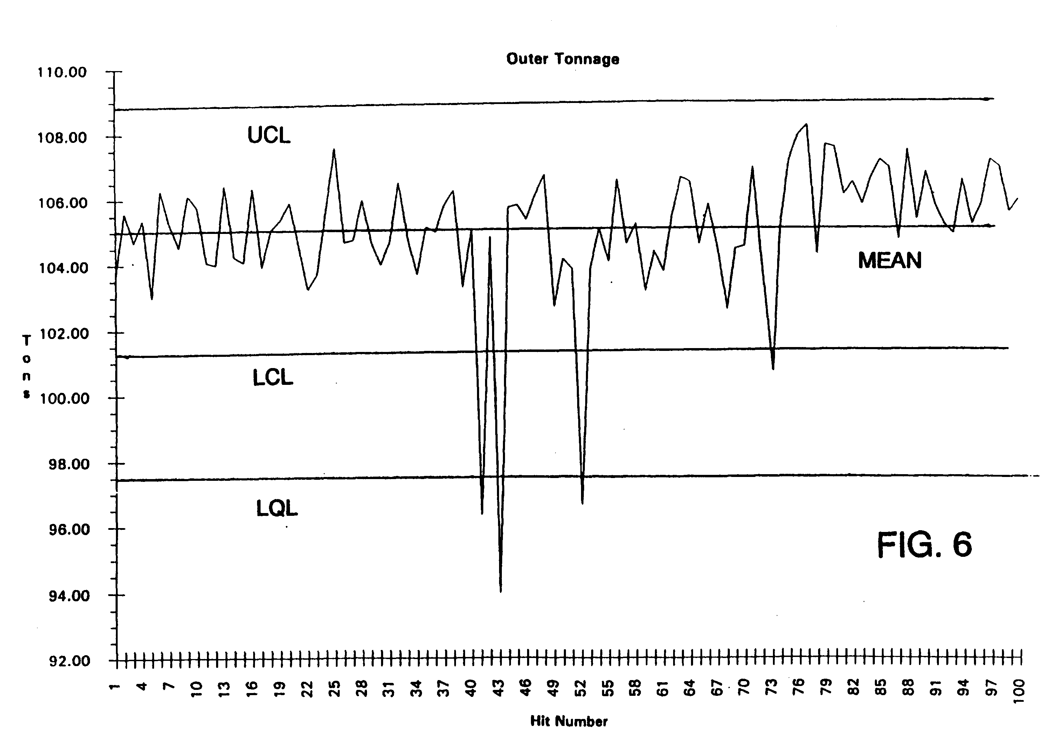

Figure 6 illustrates diagnosis and detection of unacceptable right front automobile fender panels based on process monitoring, with the outer tonnage as the extracted feature. The graph also includes the upper and lower control limits (LCL, UCL), the mean, and the lower quality limit (the upper quality is off-scale). As shown, at hits #41-#43 and #52, the outer tonnage indicates the formation of unacceptable parts since the lower quality limit was exceeded, which would otherwise not be detected (visually confirmed) until the defective parts rolled off of the press line. However, between formation of the unacceptable part and visual detection, many other unacceptable parts will be formed, and therefore, scrapped. Detection of problems immediately after the first bad part was formed enables corrective action, such as stopping the press, to be taken much earlier than with existing systems, reducing scrap and costs.

As previously indicated, the present invention is advantageously used for extracting such feature values as blank thickness and work hardening coefficient of stamping material in an on-line fashion, while the parts are being produced.

An estimation of the deviation in the blank thickness (dTh), based on the production press operating variables for the locations, may be obtained according to the following relationship:${\text{dTH=((ΔLf}}_{\text{2}} {\text{+ ΔLf}}_{\text{1}} {\text{)/2) * (B}}_{\text{t}} \text{)}$ wherein ΔLf₂ and ΔLf₁ are deviations in the production press operating variables from associated baseline mean press operating variables expressed as fractions, and Bₜ is the thickness of the blank used to form the baseline parts. Still further, a parameter dN proportional to a deviation in the work hardening coefficient, based on the production press operating variables for the locations, may be estimated according to the following relationship:$\text{dN} \text{= (Δ} {\text{Lf}}_{\text{2}} \text{- Δ} {\text{Lf}}_{\text{1}} \text{)}$

The detection of unacceptable blank thickness and work hardening coefficient in an on-line manner while parts are being produced permits a press operator to identify when corrective action needs to be taken and take the action prior to the production of defective parts and prior to the unnecessary production delays.

Referring again to Figure 2, in a draw operation as the upper binder 26 and upper punch 28 moves down toward the lower binder 30 and lower punch 32, as the press moves down towards the bottom, there is an increase in tonnage. This increase in tonnage is due to the work hardening of the sheet metal, i.e. the work hardening coefficient of a material resists the drawing operation, actually making it harder to draw as the drawing operation progresses. Without this characteristic of the material, metal forming would be impossible.

Generally, assuming the friction between the forming die and the blank to be constant, the tonnage profile during forming operation depends upon two things; the work hardening coefficient and the blank thickness. An increase in the tonnage curve is directly proportional to the increase in blank thickness with all else being constant, i.e., if the blank thickness increases by 10%, the tonnages would similarly increase by about 10%.

On the other hand, the relationship between work hardening coefficient and tonnage profile is different. With thickness being the same, if the work hardening coefficient increases, the material will work harden faster with the stroke, which will be reflected in the rate at which the tonnage increases with the stroke. More particularly, the change in slope of the tonnage over stroke of the press determines the work hardening coefficient, while the average shift in the tonnage determines the thickness. This characteristic may be used for monitoring the blank thickness and work hardening coefficient, which have been very difficult to monitor in the past.

Preferably, two locations are identified in the punch travel at which points tonnage measurements or variable measurements are to be made during the forming operation. These tonnage measurements can then be processed to obtain parameters from which deviations in blank thickness and work hardening coefficient can be identified, as described in greater detail below. Preferably, the two locations should be selected so as to cover 70% - 80% of the working stroke. That is, one should be in the beginning of the stroke, at about 10% - 15% of the travel of the upper binder 26 and upper punch 28, and the other location should be toward the end, at about 85% - 90% of the travel of the upper binder 26 and upper punch 28. It should be noted that, because of variability and the fact that the difference in tonnage at these locations is to be determined, the two locations should not be too close to each other. If a measurement is made at a certain point over and over again, there will always be some variation. If the second tonnage measurement is made at a point very close to the location of the first tonnage measurement, the difference of these two large numbers results in a very small number. When this small number is then utilized to determine slope, inaccuracies can result. Furthermore, the locations should not be too far apart toward the beginning and end of the stroke, or else inaccuracies in tonnage measurements might result. For instance, a tonnage measurement made at the bottom of the working stroke does not accurately reflect the amount of tonnage that goes into forming the metal. Toward the bottom, the amount of tonnage is a combination of the forming as well as the bottoming out of the die.

For a low-carbon sheet steel, the shape of the plastic portion of the tension stress-strain curve, expressed in terms of true stress and true strain, may be described by the following parabolic equation:$\text{σ =} \text{K} {\text{ε}}^{\text{n}}$ where σ = true stress; ε = true strain; n = strain-hardening exponent; and K = strength coefficient. These true stress and strain have counterparts, nominal stress (S) and nominal strain (e) that are calculated based on the original dimensions of the material prior to its deformation. We know that they are related according to the following equations:$\text{ε = ln(1+} \text{e} \text{)}$$\text{σ =} \text{S} \text{*(1+} \text{e} \text{)}$ Substituting yields:$\text{S} \text{*(1+} \text{e} \text{) =} \text{K} \text{* [ln(1+} \text{e} {\text{)]}}^{\text{n}}$ The nominal stress and nominal strain measurements at the punch position "i" during the draw operation will be:${\text{S}}_{\text{i}} \text{* (1+} {\text{e}}_{\text{i}} \text{)} \text{= K} \text{* [ln(1+} {\text{e}}_{\text{i}} {\text{)]}}^{\text{n}}$ For a given part design and draw operation, the nominal stress can be expressed as:${\text{S}}_{\text{i}} \text{=} \frac{{\text{L}}_{\text{i}}}{{\text{a}}_{\text{i}} \text{*} \text{t}}$ where aᵢ normalizing factor for computing the nominal stress from blank thickness "t" at the punch position "i", t = blank thickness, and Lᵢ = instantaneous punch tonnage @ punch location "i". Substituting Sᵢ into Equation 4 yields:$\frac{{\text{L}}_{\text{i}} \text{*(1+} {\text{e}}_{\text{i}} \text{)}}{{\text{a}}_{\text{i}} \text{*} \text{t}} \text{=} \text{K} \text{*[ln(1+} {\text{e}}_{\text{i}} {\text{)]}}^{\text{n}}$ Solving for Lᵢ:${\text{L}}_{\text{i}} \text{=} \frac{{\text{a}}_{\text{i}} \text{*} \text{K}}{{\text{}}_{\text{'}} \text{1 +} {\text{e}}_{\text{i} \text{'}}} \text{*} \text{t} \text{* [l 1 +} {\text{e}}_{\text{i}} {\text{]}}^{\text{n}}$ Restated:${\text{L}}_{\text{i}} \text{=} {\text{A}}_{\text{i}} \text{*} \text{t} \text{* [ln(1 +} {\text{e}}_{\text{i}} {\text{)]}}^{\text{n}}$ assuming${\text{A}}_{\text{i}} \text{=} \frac{{\text{a}}_{\text{i}} \text{*} \text{K}}{\text{(1 +} {\text{e}}_{\text{i}} \text{)}}$ Converting Equation 8 into logarithmic form yields:${\text{log(L}}_{\text{i}} {\text{) = log(A}}_{\text{i}} {\text{) + log(t) + n*log[ln(1+ε}}_{\text{i}} \text{)]}$ Partial differentiation of both sides yields:$\frac{\text{δ} {\text{L}}_{\text{i}}}{{\text{L}}_{\text{i}}} \text{=} \frac{\text{δ} \text{t}}{\text{t}} \text{+ log[ln(1 +} {\text{ε}}_{\text{i}} \text{)] * δ} \text{n}$ assuming the only change in material is the blank thickness "t" and the work hardening coefficient "n". The strength coefficient K is determined by the basic formulation and structure of steel and is assumed to be constant. Also for a given part and die-set aᵢ (and therefore Aᵢ) and eᵢ depend only on "i". Consequently, these parameters are constant for a given punch location.

For a small change in t and n:$\frac{\text{Δ} {\text{L}}_{\text{i}}}{{\text{L}}_{\text{i}}} \text{=} \frac{\text{Δ} \text{t}}{\text{t}} \text{+ log[ln(1 +} {\text{e}}_{\text{i}} \text{)] * Δ} \text{n}$ At any locations "i" of the punch, let$\text{Δ} {\text{Lf}}_{\text{i}} \text{=} \frac{\text{Δ} {\text{L}}_{\text{i}}}{{\text{L}}_{\text{i}}}$$\text{Δ} \text{tf} \text{=} \frac{\text{Δ} \text{t}}{\text{t}}$ ΔLfᵢ equals fractional tonnage variation and Δtf equals fractional blank thickness variation. Substituting yields:$\text{Δ} {\text{Lf}}_{\text{1}} \text{= Δ} \text{tf} \text{+} \text{Log} {\text{[ln(1 + ε}}_{\text{i}} \text{)] * Δ} \text{n}$ For any two punch locations, i = 1 and 2:$\text{Δ} {\text{Lf}}_{\text{1}} \text{= Δ} \text{tf} \text{+} \text{Log} {\text{[ln(1 + ε}}_{\text{1}} \text{)] * Δ} \text{n}$$\text{Δ} {\text{Lf}}_{\text{2}} \text{=} \text{Δtf} \text{+} \text{Log} {\text{[ln(1 + ε}}_{\text{2}} \text{)] * Δ} \text{n}$ Subtracting the above equations yields:${\text{(ΔLf}}_{\text{2}} \text{= Δ} {\text{Lf}}_{\text{1}} \text{) = Δ} \text{n} {\text{* log[ln(1 + ε}}_{\text{2}} {\text{)] -log[ln(1 + ε}}_{\text{1}} \text{)]}$$\text{Δ} \text{n =} \frac{\text{(Δ} {\text{Lf}}_{\text{2}} \text{- Δ} {\text{Lf}}_{\text{1}} \text{)}}{{\text{log[ln(1 + ε}}_{\text{2}} {\text{)] - log[ln(1 + ε}}_{\text{1}} \text{)]}}$$\text{Δ} \text{n} \text{=} {\text{C}}_{\text{2,1}} \text{* (Δ} {\text{Lf}}_{\text{2}} \text{- Δ} {\text{Lf}}_{\text{1}} \text{)}$ wherein${\text{C}}_{\text{2,1}} {\text{= 1/{log[ln(1 + ε}}_{\text{2}} {\text{)] - log[ln(1 + ε}}_{\text{1}} \text{)]}}$ and for a given design of panel and die set, C_{2,1} is constant for a given set of punch locations 1 and 2 representing the punch tonnages. Thus, for a given set of punch locations 1 and 2:$\text{Δ} \text{n} \text{α (Δ} {\text{Lf}}_{\text{2}} \text{- Δ} {\text{Lf}}_{\text{1}} \text{)}$ For Δn = 0$\text{Δ} \text{tf} \text{= Δ} {\text{Lf}}_{\text{1}} \text{= Δ} {\text{Lf}}_{\text{2}} \text{=} \text{Avg} \text{(Δ} {\text{Lf}}_{\text{i}} \text{)}$ The best estimate of Δtf =$\frac{\text{(Δ} {\text{Lf}}_{\text{2}} \text{+ Δ} {\text{Lf}}_{\text{1}} \text{)}}{\text{2}}$

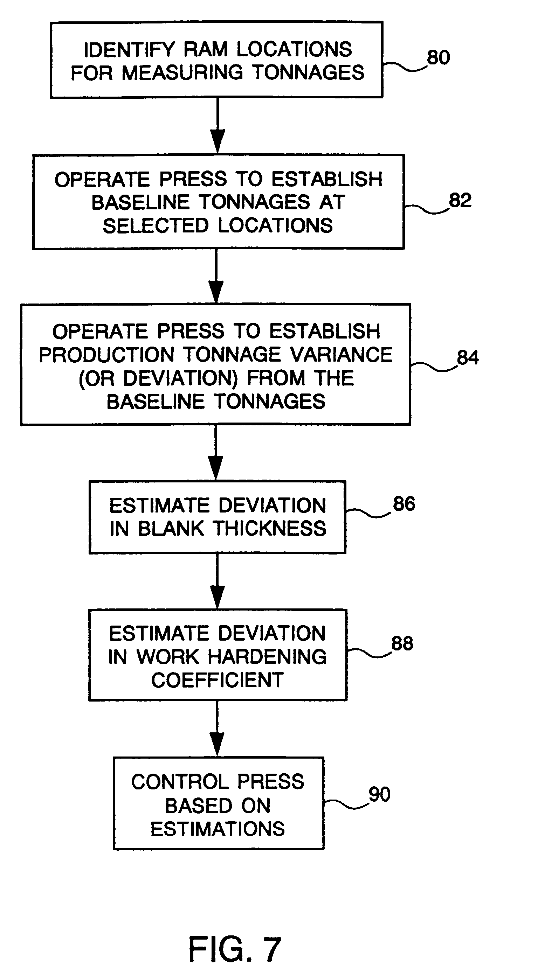

Referring now to Figure 7, there is illustrated a high-level flowchart detailing the methodology of the present invention. In the preferred embodiment, the blank thickness and work-hardening coefficient of sheet steel is monitored in a metal forming process as a variance from a reference baseline. At step 80, the two arbitrary punch locations (i = 1 and 2) for measuring the loads are selected. As previously discussed, these locations should preferably be as far apart as possible within the working stroke of the punch.

With continuing reference to Figure 3, at step 82 a baseline is established. Once you have a borderline or a stable manufacturing process, the baseline is obtained by measuring tonnages at those two locations and determining an average of a predetermined number of samples. The baseline is established as a population mean for the loads L₁ and L₂ at the selected locations. A minimum sample size of 30 cycles, for example, should be used for establishing this mean. Also, the steel used for this reference should have properties representative of the stock used for production. Thereafter, the present invention operates to identify the drift in these tonnages as the production goes on. The present invention utilizes the change in average tonnage to determine blank thickness and the change in slope to determine work hardening coefficient. At step 84, the stamping press is operated to produce production parts and production tonnages are measured at the specified locations for each production part produced, so as to determine change in tonnages from the baseline measurements.

At steps 86 and 88 the estimated variance of the thickness and the strain-hardening exponent of the steel stock are to be calculated, respectively, from the baseline sample data using the equations shown below. The deviation in the steel thickness measurement ("dTh"), in 0.001", is estimated as follows:$\text{dTh} \text{= ((Δ} {\text{Lf}}_{\text{2}} \text{+ Δ} {\text{Lf}}_{\text{1}} \text{)/2) * (} {\text{B}}_{\text{t}} \text{)}$ wherein ΔLf₁ and ΔLf₂ are computed as fractional deviations of loads L₁ and L₂ from the respective baseline means expressed as a fraction, and Bₜ = blank thickness of the baseline steel in .001". More generally, for additional points along the punch stroke "i", dTh may be determined by multiplying an average of ΔLfᵢ by Bₜ. An estimate of a variable "dN" proportional to the deviation in the work hardening coefficient can be determined as follows:$\text{dN} \text{= (Δ} {\text{Lf}}_{\text{2}} \text{- Δ} {\text{Lf}}_{\text{1}} \text{)}$

Preferably, the control mean is set to zero for both the thickness and the work-hardening coefficient, due to the steel properties being calculated as a variance from the mean of the baseline. Upper and lower control limits for steel thickness (in 0.001") are calculated as ± 3 times the standard deviation of the variable dTh above calculated from the baseline data appropriately adjusted for a given subgroup size in production using standard SPC methodology. Upper and lower control limits for the work hardening coefficient for the steel stock are calculated as ± 3 times the standard deviation of the variable dN above calculated from the baseline data appropriate adjusted for a given subgroup size in production using standard SPC methodology. If the deviations exceed the control limits (or quality limits discussed in greater detail below), at step 90 the press can be controlled appropriately (e.g. powered down) so as to reduce scrap. A control chart is preferably maintained in real-time in memory for production subgroup averages of variation in blank thickness dTh and the parameter dN calculated using the above-noted equations.

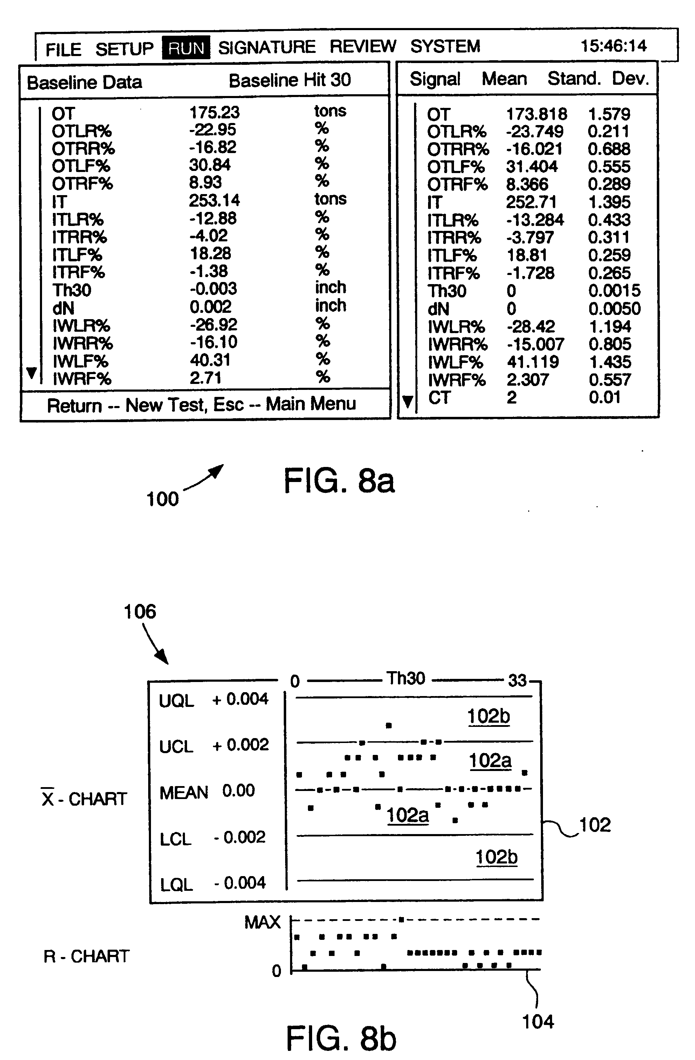

Referring now to Figures 8a-8b, process monitoring preferably generates a custom screen which contains a display of features, including blank thickness (Th) and work hardening coefficient (N), shown generally by reference numeral 100. As previously indicated in connection with the Figure 4a discussion, the system is capable of monitoring a number of other features, such as total outer tonnage (OT), total inner tonnage (IT), outer and inner tonnage percentages (OLLR%, OLRR%, OLLF%, OLRF%, ILLR%, ILRR%, ILLF%, ILRF%), inner work percentages (IWLR%, IWRR%, IWLF%, IWRF%) and cycle time (CT). The operational limits include control limits and quality limits. During process monitoring, statistical process control charts, such as an X-bar chart, shown generally by reference numeral 102 in Figure 8b, and an R-chart shown generally by reference numeral 104 in Figure 8b, are generated and updated as data is collected, for each box displayed.

With continuing reference to Figure 8b, the areas of the X-bar chart shown generally by 102a indicate a feature that is under control, and the areas of the chart shown generally by 102b indicate a feature that has exceeded the control limits, but is within quality limits (i.e. within acceptable part tolerances). Exceeding the control limits signifies that the process is not in statistical control and is indicative of the presence of a special cause of excessive variation. For a process to be considered in control, all of the features should be in the control limits. Exceeding the quality limits signifies a process that will produce out-of-spec parts. The X-bar chart 102 of Figure 8b shows the blank thickness (Th) collected during process monitoring for the press, in relation to the control limits and quality limits determined based on the means and standard deviation associated with the previously collected baseline data.

With continuing reference to Figure 8b, an SPC chart such as that shown by reference numeral 106 may be created for blank thickness or work hardening coefficient data. As previously indicated, the charts are created using lines which are color-coded based on the limits of the data.

The following truth table may be used for concluding the diagnosis of the material properties when other press settings are within control limits:

| dTh | dN | Conclusions |
|---|---|---|
| In Control | In Control | Blank thickness and work hardening coefficient of the material are in control |
| In Control | Out of Control | Work-hardening coefficient drifted; blank thickness is in control |
| Out of Control | In Control | Blank thickness drifted; work hardening coefficient is in control |
| Out of Control | Out of Control | Work-hardening coefficient drifted; blank thickness may or may not be in control |

If the control limits and/or the quality limits have been exceeded, an appropriate alarm, such as a visual or audio indicator, can be activated.

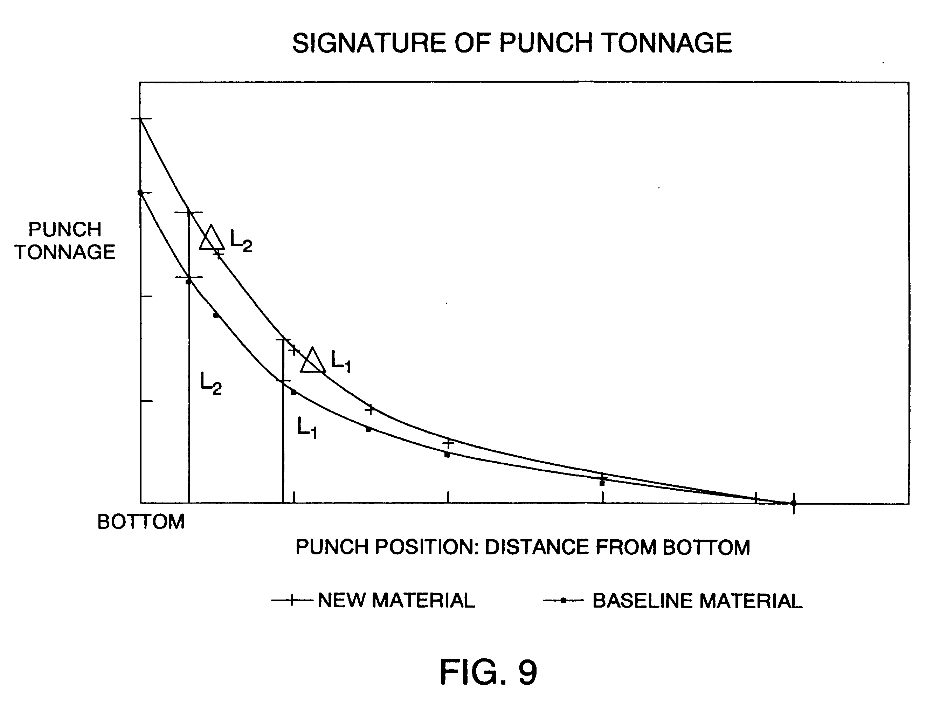

Referring now to Figure 9, there is shown a graphical plot of two punch tonnage signatures over time (punch position) : a first signature for a baseline sheet metal stock and a second signature for a new batch of sheet metal stock. As shown, there is a increase in tonnage associated with the new sheet metal, compared to the tonnage associated with the baseline sheet metal. This increase in tonnage, which is indicative of a change in the sheet metal stock, can then be expressed as a fractional tonnage deviation from the baseline at the respective locations. To determine the change in thickness, the average of these fractional tonnage deviations is determined. Furthermore, the difference between fractional tonnages at the two locations can be determined. This difference represents the change in slope. If the difference happens to be zero, the slope is unchanged. If the tonnage deviation at one location, expressed as a fraction, changes more than the other, then the difference represents the change in slope. This can then be plotted in the control chart with a mean of zero to determine change in work hardening coefficient.

It is understood, of course, that while the form of the invention herein shown and described constitutes the preferred embodiment of the invention, it is not intended to illustrate all possible forms thereof.

## Claims

1. A method of monitoring the operat.ion of a stamping press (14) including a punch and die (28, 32) for forming parts from a blank, the method including measuring a production variable at at least two preselected locations in the press stroke, and determining the deviation of the variable from a reference value at each of the locations to detect when deviations exceed control limits;
characterised in that the production variable measured at the preselected locations in the press stroke is the punch tonnage and the method includes the further steps of
calculating deviations in the thickness of the blank by calculating changes in the average punch tonnage measured at the preselected locations and,
calculating deviations in the work hardening coefficient of the material of the blank by calculating changes in the slope of the punch tonnage at the preselected locations.

2. A method as claimed in claim 1, wherein the punch tonnage is measured at locations in the press stroke to cover an intermediate portion of the press stroke comprising 70 to 80% thereof.

3. A method as claimed in claim 1 or 2, wherein a deviation (dTh) in the blank thickness is estimated according to the relationship:${\text{dTh = ((ΔLf}}_{\text{2}} {\text{+ ΔLf}}_{\text{1}} {\text{)/2) * (B}}_{\text{t}} \text{)}$ wherein ΔLf₂ and ΔLf₁ are deviations, expressed as fractions, in the punch tonnage, and Bₜ is a reference thickness of the blank.

4. A method as claimed in claim 1, 2 or 3, wherein a parameter (dN) proportional to a deviation in the work hardening coefficient is estimated according to the relationship:${\text{dN = (ΔLf}}_{\text{2}} {\text{- ΔLf}}_{\text{1}} \text{)}$ wherein ΔLf₂ and ΔLf₁ are deviations, expressed as fractions, of the punch tonnage.

5. A press monitoring system for monitoring the operation of a stamping press (14) including a punch and die (28, 32) for forming parts from a blank, the system comprising means for measuring a production variable at at least two preselected locations in the press stroke, and means for determining the deviation of the variable from a reference value at each of the locations to detect when deviations exceed control limits;
characterised in that the production variable measured at the preselected locations in the press stroke is the punch tonnage and the system further includes
means (86) to calculate deviations in the thickness of the blank by calculating changes in the average punch tonnage measured at the preselected locations and,
means (88) for calculating deviations in the work hardening coefficient of the material of the blank by calculating changes in the slope of the punch tonnage at the preselected locations.

6. A system as claimed in claim 5, wherein the punch tonnage is measured at locations in the press stroke to cover an intermediate portion of the press stroke comprising 70 to 80% thereof.

7. A system as claimed in claim 5 or 6, wherein a deviation (dTh) in the blank thickness is estimated according to the relationship:${\text{dTh = ((ΔLf}}_{\text{2}} {\text{+ ΔLf}}_{\text{1}} {\text{)/2 * (B}}_{\text{t}} \text{)}$ wherein ΔLf₂ and ΔLf₁ are deviations, expressed as fractions, in the punch tonnage, and Bₜ is a reference thickness of the blank.

8. A system as claimed in claim 5, 6, or 7, wherein a parameter (dN) proportional to a deviation in the work hardening coefficient is estimated according to the relationship:${\text{dN = (ΔLf}}_{\text{2}} {\text{- ΔLf}}_{\text{1}} \text{)}$ wherein ΔLf₂ and ΔLf₁ are deviations, expressed as fractions, of the punch tonnage.

## Patentansprüche

1. Ein Verfahren zur Überwachung des Betriebs einer Stanzpresse (14), die Patrize und Matrize (28, 32) umfaßt, zum Formen von Teilen aus einem Rohteil, wobei das Verfahren die Messung einer Fertigungsvariablen an mindestens zwei vorgewählten Positionen im Pressenhub und die Bestimmung der Abweichung der Variablen von einem Referenzwert an jeder der Positionen umfaßt, um zu erfassen, wenn die Abweichungen Kontrollgrenzwerte überschreiten;
dadurch gekennzeichnet, daß die an den vorgewählten Positionen im Pressenhub gemessene Fertigungsvariable die Stanznennkraft ist, und daß das Verfahren ferner folgende Schritte umfaßt:
Die Berechnung der Abweichungen der Rohteildicke mittels Berechnung von Abweichungen von der durchschnittlichen Stanznennkraft, die an den vorgewählten Positionen gemessen wird, und
die Berechnung der Abweichungen des Kaltverfestigungskoeffizienten des Rohteilmaterials mittels Berechnung von Veränderungen der Steigung der Stanznennkraft an den vorgewählten Positionen.

2. Ein Verfahren nach Anspruch 1, worin die Stanznennkraft an Positionen im Pressenhub so gemessen wird, daß ein mittlerer Bereich des Pressenhubs, der 70 bis 80% hiervon umfaßt, abgedeckt wird.

3. Ein Verfahren nach Anspruch 1 oder 2, worin eine Abweichung (dTh) der Rohteildicke nach der Beziehung:${\text{dTh = ((ΔLf}}_{\text{2}} {\text{+ΔLf}}_{\text{1}} {\text{)/2) * (B}}_{\text{t}} \text{)}$ geschätzt wird, wobei ΔLf₂ und ΔLf₁ als Bruchteile ausgedrückte Abweichungen der Stanznennkraft sind und Bₜ eine Bezugsgröße für die Rohteildicke ist.

4. Ein Verfahren nach Anspruch 1, 2 oder 3, worin ein Parameter (dN), der proportional zur Abweichung des Kaltverfestigungskoeffizienten ist, nach der Beziehung:${\text{dN = (ΔLf}}_{\text{2}} {\text{- ΔLf}}_{\text{1}} \text{)}$ geschätzt wird, worin ΔLf₂ und ΔLf₁ als Bruchteile ausgedrückte Abweichungen der Stanznennkraft sind.

5. Ein System zur Überwachung einer Presse, um den Betrieb einer Stanzpresse (14), die Patrize und Matrize (28, 32) zum Formen von Teilen aus einem Rohteil umfaßt, zu überwachen, wobei das System eine Vorrichtung umfaßt, um eine Fertigungsvariable an mindestens zwei vorgewählten Positionen im Pressenhub zu messen, und eine Vorrichtung, um die Abweichung der Variablen von einem Referenzwert an jeder der Positionen zu bestimmen und zu erfassen, wenn die Abweichungen Kontrollgrenzwerte überschreiten;
dadurch gekennzeichnet, daß die Fertigungsvariable, die an den vorgewählten Positionen im Pressenhub gemessen wird, die Stanznennkraft ist, und daß das System ferner umfaßt:
Eine Vorrichtung (86), um Abweichungen der Rohteildicke zu berechnen, indem Änderungen der durchschnittlichen Stanznennkraft, die an den vorgewählten Positionen gemessen wird, berechnet werden, und
eine Vorrichtung (88), um Abweichungen im Kaltverfestigungskoeffizienten des Materials des Rohteils zu berechnen, indem Änderungen der Steigung der Stanznennkraft an den vorgewählten Positionen berechnet werden.

6. Ein System nach Anspruch 5, worin die Stanznennkraft an Positionen im Pressenhub gemessen wird, die einen mittleren Bereich des Pressenhubs, der 70 bis 80% desselben umfaßt, abdecken.

7. Ein System nach Anspruch 5 oder 6, worin eine Abweichung (dTh) der Rohteildicke nach der Beziehung:${\text{dTh = ((ΔLf}}_{\text{2}} {\text{+ΔLf}}_{\text{1}} {\text{)/2) * (B}}_{\text{t}} \text{)}$ geschätzt wird, worin ΔLf₂ und ΔLf₁ als Bruchteile ausgedrückte Abweichungen der Stanznennkraft sind und Bₜ eine Referenz-Rohteildicke ist.

8. Ein System nach Anspruch 5, 6 oder 7, worin ein Parameter (dN), der proportional zur Abweichung des Kaltverfestigungskoeffizienten ist, nach der Beziehung:${\text{dN = (ΔLf}}_{\text{2}} {\text{- ΔLf}}_{\text{1}} \text{)}$ geschätzt wird, worin ΔLf₂ und ΔLf₁ als Bruchteile ausgedrückte Abweichungen der Stanznennkraft sind.

## Revendications

1. Procédé de surveillance du fonctionnement d'une presse à estamper (14) comprenant un poinçon et une matrice (28, 32) destinés à former les pièces à partir d'une ébauche, le procédé comprenant la mesure d'une variable de production en au moins deux emplacements présélectionnés de la course de la presse, et à déterminer l'écart de la variable par rapport à une valeur de référence à chacun des emplacements afin de détecter lorsque des écarts dépassent les limites de commande,
caractérisé en ce que la variable de production mesurée aux emplacements présélectionnés dans la course de la presse est l'effort de poinçonnement et le procédé comprend les étapes supplémentaires consistant à
calculer les écarts de l'épaisseur de l'ébauche en calculant des variations de l'effort de poinçonnement moyen mesuré aux emplacements présélectionnés et,
calculer des écarts du coefficient d'écrouissage du matériau de l'ébauche en calculant des variations de la pente de l'effort de poinçonnement aux emplacements présélectionnés.

2. Procédé selon la revendication 1, dans lequel l'effort de poinçonnement est mesuré aux emplacements de la course de la presse de façon à recouvrir une partie intermédiaire de la course de la presse comprenant 70 à 80 % de celle-ci.

3. Procédé selon la revendication 1 ou 2, dans lequel un écart (dTh) de l'épaisseur de l'ébauche est estimé conformément à la relation :${\text{dTh = ((ΔLf}}_{\text{2}} {\text{+ ΔLf}}_{\text{1}} {\text{)/2) * (B}}_{\text{t}} \text{)}$ dans laquelle ΔLf₂ et ΔLf₁ sont des écarts, exprimés sous forme de fractions, de l'effort de poinçonnement, et Bₜ est une épaisseur de référence de l'ébauche.

4. Procédé selon la revendication 1, 2 ou 3, dans lequel un paramètre (dN) proportionnel à un écart du coefficient d'écrouissage est estimé conformément à la relation :${\text{dN = (ΔLf}}_{\text{2}} {\text{- ΔLf}}_{\text{1}} \text{)}$ dans laquelle ΔLf₂ et ΔLf₁ sont des écarts, exprimés sous forme de fractions, de l'effort de poinçonnement.

5. Système de surveillance de presse destiné à surveiller le fonctionnement d'une presse à estamper (14) comprenant un poinçon et une matrice (28, 32) destinés à former les pièces à partir d'une ébauche, le système comprenant un moyen destiné à mesurer une variable de production en au moins deux emplacements présélectionnés dans la course de la presse, et un moyen destiné à déterminer l'écart de la variable par rapport à une valeur de référence à chacun des emplacements, afin de détecter lorsque des écarts dépassent les limites de commande,
caractérisé en ce que la variable de production mesurée aux emplacements présélectionnés de la course de la presse est l'effort de poinçonnement et le système comprend en outre
un moyen (86) destiné à calculer des écarts de l'épaisseur de l'ébauche en calculant les variations de l'effort de poinçonnement moyen mesuré aux emplacements présélectionnés et,
un moyen (88) destiné à calculer des écarts du coefficient d'écrouissage du matériau de l'ébauche en calculant des variations de la pente de l'effort de poinçonnement aux emplacements présélectionnés.

6. Système selon la revendication 5, dans lequel l'effort de poinçonnement est mesuré à des emplacements de la course de la presse de façon à couvrir une partie intermédiaire de la course de la presse comprenant 70 à 80 % de celle-ci.

7. Système selon la revendication 5 ou 6, dans lequel un écart (dTh) de l'épaisseur de l'ébauche est estimé conformément à la relation :${\text{dTh = ((ΔLf}}_{\text{2}} {\text{+ ΔLf}}_{\text{1}} {\text{)/2) * (B}}_{\text{t}} \text{)}$ dans laquelle ΔLf₂ et ΔLf₁ sont des écarts, exprimés sous forme de fractions, de l'effort de poinçonnement, et Bₜ est une épaisseur de référence de l'ébauche.

8. Système selon la revendication 5, 6 ou 7, dans lequel un paramètre (dN) proportionnel à un écart du coefficient d'écrouissage est estimé conformément à la relation :${\text{dN = (ΔLf}}_{\text{2}} {\text{- ΔLf}}_{\text{1}} \text{)}$ dans laquelle ΔLf₂ et ΔLf₁ sont des écarts, exprimés sous forme de fractions, de l'effort de poinçonnement.
